# FASCICULE DE BREVET EUROPEEN

(11) **EP 2 473 640 B1**
(45) Date de publication et mention de la délivrance du brevet: **29.05.2013**
(21) Numéro de dépôt: 10773144.0
(22) Date de dépôt: 31.08.2010
(51) Int. Cl.: C14C 11/00, C09D 101/14, C09D 101/18

(54) **COMPOSITIONS DE FINISSAGE DU CUIR COMPRENANT DES DÉRIVÉS DE DIOXOLANE**
ZUSAMMENSETZUNGEN FÜR DIE LEDERZURICHTUNG, DIE DIOXOLAN-DERIVATE ENTHALTEN
COMPOSITIONS FOR LEATHER FINISHIING WHICH CONTAIN DIOXOLANE DERIVATIVES

(30) Priorité: 03.09.2009 FR 0956007
(43) Date de publication de la demande: 11.07.2012
(73) Titulaire: Rhodia Poliamida E Especialidades Ltda, Sao Paulo - SP (BR)
(72) Inventeur: BONIFACIO HAUFFE, Daniela, 13085-220 Paulinia, SP (BR); VICENTIM, Denilson Jose, 13050-544, Campinas, SP (BR); GARBELOTTO, Paulo Roberto, 13085-309, Caminas SP (BR)
(74) Mandataire: Blanchard, Isabelle Jackie
(86) Numéro de dépôt international: PCT/IB2010/002154
(87) Numéro de publication internationale: WO 2011/027205

(56) Documents cités:
- EP-B1- 0 927 200
- BE-A- 595 703
- FR-A1- 2 912 149

## Description

La présente invention concerne de nouvelles utilisations pour des dérivés de dioxolane dans le finissage du cuir, ainsi que des compositions de finissage du cuir comprenant des dérivés de dioxolane et un procédé pour traiter le cuir.

### CONTEXTE DE L'INVENTION

Le tannage est un procédé chimique, par du tanin, pour transformer les peaux en cuir en les rendant plus durables et plus souples. Dans la technologie du cuir, les fonctions de l'étape de finissage englobent l'égalisation de la couleur, l'ajustement de la brillance, ainsi que la formation d'une surface protectrice avec une bonne résistance à l'eau, à l'attaque chimique et à l'abrasion. À cette étape, le cuir va acquérir des propriétés spécifiques, notamment sur sa texture et son aspect. Ces propriétés permettront d'uniformiser les cuirs issus de la production. Certains composés servent d'agents d'égalisation, d'agents de pénétration et d'adjuvants de solubilisation de colorants.

En ce qui concerne le procédé de finissage, typiquement une couche appelée revêtement d'apprêt sur le cuir est d'abord appliquée. L'adhérence de la première couche au substrat (cuir) est très importante pour le finissage.

Ensuite un deuxième revêtement est appliqué, lequel est plus dur que le revêtement d'apprêt et contient des dispersions de polymères, par exemple des polyacrylates, et des pigments, facultativement à base d'eau. Cette couche est très importante en ce qui concerne la couleur et l'épaisseur de la finition. Les pigments pour la teinture et le finissage du cuir sont, dans la plupart des cas, inorganiques, mais des pigments organiques peuvent également être utilisés. Il est souhaité que cette formulation forme un film plus solide et résistant, si on le compare au revêtement d'apprêt. Après application du deuxième revêtement, le cuir est communément repassé.

La troisième couche de revêtement peut être une solution de solvant à base de nitrocellulose, une émulsion de nitrocellulose ou de polyuréthane à base d'eau et elle ne contient généralement pas de pigments. Sa teneur en matières solides est à peu près de 10%. Cette couche supérieure détermine les propriétés finales du cuir: elle doit être aussi dure et compacte que possible pour créer la résistance au frottement souhaitée et suffisamment souple pour se plier et subir un déplacement rapide sans casser. La troisième couche de revêtement est probablement la plus importante parce qu'elle est responsable de l'aspect et de la texture du cuir, en plus de conférer une résistance vis-à-vis des influences mécaniques, de l'eau et de la poussière. Les couches sous-jacentes servent de pont entre la structure et la surface du cuir. Les polymères les plus utilisés dans le procédé de finissage sont les polyacrylates, le polybutadiène et le polyuréthane. Ils sont généralement appliqués par pulvérisation ou par le procédé de moulage par coulée.

EP 0 927 200 B divulgue une composition de revêtement à base de polyuréthane qui résulte de la polymérisation d'oligomères formés à partir de la réaction d'un monomère de vinyl-dioxolane substiué à fonction alcool et d'un polyisocyanate. Ladite composition peut être utilisée pour le traitement de cuir.

FR 2 912 149 A divulgue l'utilisation de dérivés de dioxolane, notamment le 2,2-diméthyl-1,3-dioxolane-4-méthanol, comme agent filmogène dans des systèmes de revêtement comme vernis et peintures, particulièrement peintures industrielles, graphiques et architecturales.

Il existe de nombreux solvants organiques connus qui sont utilisés dans le finissage du cuir. Ci-dessous, le tableau I montre la fonction de quelque uns de ces solvants:

| **Famille** | **Produits** | **Applications clés** |
|---|---|---|
| Alcools | Isopentanol | Formulations de co-solvant pour le finissage du cuir |
| | Alcool isobutylique | |
| | Sec-butanol | |
| Acétates d'alcools et d'éthers de glycols | Acétate d'isopentyle | Solvants actifs d'évaporation moyenne et faible pour les colorants du cuir de finissage et les semelles |
| | Acétate d'éthylglycol | |
| | Acétate de butylglycol | |
| Cétones | Méthyléthylcétone | Solvant actif léger pour les formulations pour le cuir, les peintures et les semelles |
| Ethers de glycols | Ethylglycol | Agent de pénétration pour les formulations de finissage du cuir |
| | Butylglycol | |

Parmi les solvants mentionnés ci-dessus, trois ont une vitesse d'évaporation plus faible : l'acétate d'éthylglycol, l'acétate de butylglycol et le butylglycol et, par conséquent, ils sont les derniers solvants évaporés dans les formulations. Ces solvants s'évaporent lentement pour assurer que la finition est bien égalisée et que le film est formé avant que le système ne soit complètement séché.

Comme mentionné dans le tableau 1, le butylglycol est utilisé comme agent de pénétration, lequel vise à accélérer la pénétration de l'encre dans le substrat. Ainsi, ce solvant donne une meilleure pénétration de l'encre et une amélioration résultante de l'adhérence au substrat.

Les solvants connus utilisés dans le finissage du cuir devraient, en plus de solubiliser les résines, également diluer les pigments et les colorants. Il y a plusieurs types de finissage qui sont classés en fonction du colorant utilisé, par exemple le finissage aniline. Celui-ci conserve la transparence et toutes les propriétés visuelles du cuir, telles que les pores, la coloration, la cicatrisation d'égratignures et les marques de parasites. Le finissage semi-aniline utilise des résines, des laques et des agents auxiliaires pour la résistance en surface du cuir. Cependant, dans ce cas une association de pigments et d'un complexe métallique est préparée pour masquer les défauts tels que les marques provenant de parasites.

Les colorants complexes métalliques sont habituellement solubilisés par des solvants tels que l'éthylglycol, le butylglycol et l'éthanol. A présent, des solvants à bon pouvoir dissolvant pour les complexes d'aniline-métal ont été identifiés.

Dans le marché pour le finissage du cuir, il y a trois inconvénients à utiliser des formulations à base de solvant : la forte odeur, l'inflammabilité et les risques pour la santé que ces produits peuvent provoquer. Ainsi, il existe un besoin reconnu pour de nouveaux solvants et de nouvelles formulations qui sont moins agressifs pour la santé et également moins dangereux en ce qui concerne les explosions.

Il existe par ailleurs désormais des réglementations sur la limitation des émissions des composés organiques volatiles dues à l'utilisation de solvants organiques dans certaines activités et installations. Ces réglementations ont un impact direct sur l'utilisation des composés organiques volatiles dans les procédés de finissage des tanneries où la consommation de solvant organique est importante.

### DESCRIPTION DE L'INVENTION

Une nouvelle utilisation pour certains dioxolanes a été étonnamment trouvée, avec des avantages par rapport aux solvants et agents existants pour les composants de compositions de finissage du cuir connus dans l'art antérieur, ou au moins comme alternatives techniques importantes à ceux-ci.

La présente invention concerne l'utilisation de dérivés de dioxolane de formule I dans des compositions de finissage du cuir. Les dérivés de dioxolane de formule I sont préférentiellement utilisés dans la deuxième ou la troisième couche de revêtement des étapes de finissage du cuir.

L'invention concerne aussi l'utilisation de dérivés de dioxolane de formule I comme agent de pénétration dans des compositions de finissage du cuir.

L'invention concerne également un procédé de traitement du cuir comprenant au moins une étape où la composition de finissage du cuir de l'invention est appliquée à la surface du cuir en train d'être traité.

Les dioxolanes de cette invention répondent à la formule I ci-dessous : 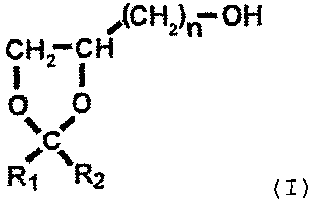 où R₁ et R₂ sont identiques ou différents, choisis parmi l'hydrogène, un alkyle, un alcényle et un phényle, n étant un nombre entier de 1 à 5.

Dans un mode de réalisation particulier R₁ et R₂ sont choisis dans le groupe constitué par un méthyle, éthyle, n-propyle ou isobutyle. Egalement en particulier n est soit 1 soit 2.

Dans un autre mode de réalisation particulier, le dérivé de dioxolane est le 2,2-diméthyl-1,3-dioxolane-4-méthanol, connu comme étant le solketal (numéro d'enregistrement CAS 100-79-8). Dans ce qui suit le solketal est mentionné seulement comme un exemple représentatif des dérivés de dioxolane de l'invention et ne limite en aucune manière l'étendue de l'invention seulement à ce seul composé.

Le butylglycol est un solvant connu et largement utilisé dans le domaine de la finission du cuir, et il est utilisé ici comme paramètre de comparaison pour le solketal dans des compositions de finissage du cuir. On peut voir des données choisies concernant ces deux solvants dans le tableau 2 ci-dessous.

**Tableau 2. Propriétés physicochimiques des solvants butylglycol et solketal**

| **Propriété** | **Butylglycol** | **Solketal** |
|---|---|---|
| TER | 6,80 | 2,70 |
| Densité, g/ml à 20 °C | 0,90 | 1,07 |
| Solubilité, eau à 20 °C | miscible | miscible |
| MIR, g de O₃/g de composé | 2,79 | 2,01 |
| Biodégradabilité | aisément | dans des conditions légèrement acides |
| DL50 (par voie orale/souris, mg/kg) | 1480 | 7000 |
| Point d'ébullition (°C) | 171 | 182-185 |
| Point d'éclair (°C) | 62 | 91 (en vase clos) |
| Hygroscopicité | oui | oui |
| Toxicité orale aiguë, mg/kg | 1,95 | 7,00 |
| Toxicité aquatique, mg/ml | 1,72 | > 1,00 |
| Viscosité, cP à 25 °C | 2,9 | 11,0 |
| Irritation de la peau | modérée | modérée |
| Irritation des yeux | forte | forte |
| Pression de vapeur | 0,8 | 70 |
| Odeur | odeur d' éther | faible |

Comme le butylglycol, le solketal est un solvant qui a un taux d'évaporation (TER) relativement faible, par conséquent il est l'un des derniers solvants à s'évaporer dans une formulation d'encre. En outre, il a un point d'éclair supérieur à celui du butylglycol, ne présentant ainsi pas de risque d'explosion, et étant par conséquent plus aisé à manipuler et transporter.

Le solketal peut être considéré comme moins toxique que le butylglycol, selon la toxicité orale aiguë LD50 (par voie orale/chez la souris). Un autre facteur positif du solketal est que son odeur est beaucoup plus faible que celle du butylglycol donc son utilisation dans l'industrie du cuir est plus acceptable.

Pour les autres risques pour la santé tels que l'endommagement de la peau et des yeux, le comportement des deux solvants est similaire. Les deux solvants sont hygroscopiques et ont une solubilité de presque 100 % dans l'eau à 20 °C.

En termes de biodégradabilité, à un pH légèrement acide le solketal peut se reconvertir en acétone et en glycérine, qui sont des composés biodégradables.

Un autre avantage du solketal est qu'il a une valeur de MIR (réactivité incrémentale maximale) inférieure à celle du butylglycol, donc qu'il est moins agressif vis-à-vis de l'environnement en termes de COV (composés organiques volatils).

Les compositions peuvent éventuellement comprendre d'autres solvants organiques, tels que par exemple ceux choisis dans le groupe constitué par: les esters, les ethers de glycol, les alcools, les cétones et les hydrocarbones aromatiques. On peut citer à cet effet l'acétate d'isopropyle, l'acétate d'isopentyle, l'acétate de n-butyle, l'acétate d'éthyle, l'acétate de n-propyle, l'acétate de n-amyle, le 2-ethoxyéthanol, l'isopropanol, le 2-butoxyéthanol, l'acétate de 2-éthoxyéthyle, l'acétate de 2-butoxyéthyle, le 1-méthoxy-2-propanol, l'acétate de 1-méthoxy-2-propyle, l'acétate d'éthylgycol, l'acétate de butylglycol, l'alcool méthylique, l'alcool éthylique, l'alcool n-propylique, l'alcool isopropylique, l'alcool n-butylique, l'alcool isobutylique, le sec-butanol, le di-acétone alcool, l'acétone, la méthyléthylcétone, la méthylisobutylcétone, la cyclohexanone, la diisobutyl cétone, le xylène et le toluène.

Les compositions de finissage peuvent comprendre des composants classiquement utilisés dans le domaine, tels que les liants, les agents de coloration, les agents auxiliaires, les vernis, les porteurs et les biocides.

Un liant est le principal constituant de la formation d'un film de finissage de cuir. Il lie les pigments et d'autres matières conjointement et grâce à ses propriétés adhésives, fait adhérer le film au cuir. Les liants protéiques sont généralement constitués de préparations à base d'albumine et de caséine. Ils peuvent aussi contenir des additifs tels que des cires et de la gomme laque. Ils sont disponibles sous forme de poudre et peuvent être dissous avec de l'hydroxyde de sodium, de l'ammoniaque ou du borax. Les liants protéiques utilisent des plastifiants, tels que de l'huile de ricin sulfatée ou du polyéthylène glycol.

Les émulsions de résines sont les liants les plus couramment utilisés dans les tanneries. Elles comprennent généralement des polyacrylates, des butadiènes, des polyuréthanes, ou des acétates de vinyle. Les résines sont des émulsions à base d'eau.

Les agents de coloration comprennent les colorants et les pigments. Les colorants s'utilisent dans les formulations de finissage pour une application particulière. Les colorants utilisés en finissage sont sous forme liquide et sont généralement des colorants pré-métallisées.

Les pigments constituent la plus grosse partie des agents de coloration utilisés dans le finissage du cuir. Les principaux types de pigments sont les pigments organiques et les pigments inorganiques. Les pigments inorganiques sont par exemple, des oxydes de fer, du dioxyde de titane et du noir de charbon mais aussi des composés de métaux lourds, par exemple du chromate de plomb, du molybdate de plomb et du sulfate de cadmium.

Les colorants utilisés dans les tanneries peuvent être classés en deux familles : les colorants anioniques et les colorants cationiques. L'industrie du cuir utilise fréquemment des colorants anioniques, qui peuvent être regroupés dans les familles suivantes : les colorants acides, les colorants directs, les colorants mordançables, les colorants pré-métallisés et les colorants au soufre solubilisés.

Du point de vue chimique, les colorants sont généralement des colorants azoïques ou des colorants anthraquinones.

Les colorants à complexe métallique sont généralement utilisés et sont constitués d'un ion métallique central et d'un ou deux ligands de colorants azoïques. L'ion central peut être du fer, du chrome, du nickel, du cuivre et du cobalt.

Au cours de l'opération de teinture, des agents mouillants, des agents d'égalisation, des agents de blanchiment, des intensificateurs de teinte, des agents de post-traitement et des agents de fixation peuvent être appliqués. Tous ces produits ont des effets différents sur le colorant et sur le cuir. Certains vont faciliter l'absorption du colorant, d'autres vont en faciliter la pénétration. Certains produits permettent d'améliorer les propriétés de stabilité à la lumière des cuirs fabriqués.

De nombreux agents auxiliaires peuvent être utilisés. Pour la dispersion des pigments divers solvants organiques et/ou des agents tensio-actifs peuvent être ajoutés. La préparation peut, en outre, contenir des cires, des mucilages végétaux, des produits de la cellulose ou des polymères comme colloïdes protecteurs, des huiles naturelles ou synthétiques comme agents d'assouplissement. Pour l'obtention de propriétés spéciales, on applique des agents de mordançage, des agents d'adhérence de fleur, des agents de pénétration, des agents anti-collants, des agents épaississants et des stabilisateurs, des agents plastifiants (phthalates), des agents de matité et des agents de fixation.

Les vernis ou les émulsions de vernis forment la couche supérieure ou couche de fixation d'un finissage. Les vernis sont généralement fabriqués en dissolvant de la nitrocellulose dans des solvants, par exemple l'acétate d'éthyle, le méthoxypropanol, le méthylisobutylcétone. Ces solutions peuvent être émulsifiées avec de l'eau et des agents tensio-actifs pour donner des émulsions de vernis. Des vernis polyuréthanes sont également utilisés.

La composition de finissage du cuir selon l'invention comprend préférentiellement une résine à base de dérivé de cellulose, telle que d'acétobutyrate de cellulose ou de nitrocellulose.

Les porteurs s'utilisent pour produire des suspensions/dispersions des liants des formulations de finissage. L'eau et les solvants organiques sont considérés comme des porteurs. Les solvants organiques utilisés peuvent être regroupés en deux catégories : solvants qui dissolvent réellement les liants tel que par exemple l'acétate d'éthyle, et diluants qui permettent à la solution toute prête d'être diluée afin d'avoir une certaine viscosité de pulvérisation ou la concentration souhaitée tel que par exemple le méthoxypropanol et l'alcool iso-propylique.

Les biocides peuvent être appliqués dans divers procédés de tannage afin de protéger le substrat contre une attaque bactérienne ou fongique. En règle générale, les biocides sont inclus dans la plupart des formulations chimiques liquides, telles que les teintures, les huiles de nourriture et les finissages à base de caséine. Les biocides peuvent être des bactéricides ou des fongicides.

Il existe un large éventail de méthodes d'application des compositions de finissage, tel que le peluchage, l'enduction par pulvérisation, l'enduction au rideau, l'enduction au rouleau ou l'application par transfert.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

Dans les exemples ci-dessous, il faut tenir compte du fait que le solketal présente des avantages, utilisé seul ou en remplacement partiel d'autres solvants, à cause de ses qualités de plus faible inflammabilité, de plus faible toxicité et de la plus faible odeur par comparaison avec les solvants communément utilisés dans l'industrie.

### Exemple 1. AGENT DE PENETRATION

On a testé le solketal dans la formulation comme agents de pénétration, en remplacement de glycols tels que l'éthylglycol et l'acétate de butylglycol.

La performance était similaire à celle de la formulation de système d'origine sans inconvénient. L'odeur minimale par comparaison avec les autres solvants est, un grand avantage.

La simulation d'essais d'imprégnation ne montra pas de problèmes de pénétration dans le cuir avec une application en plusieurs points.

Dans l'utilisation avec un colorant pour la teinture, lorsque la finition est encore humide, le solketal efface légèrement la couleur de l'encre. Mais lorsque la finition est complètement sèche, on n'a détecté aucun changement visible en termes de couleur. On n'a également détecté aucun changement dans la vitesse de pénétration de l'encre dans le substrat.

On a effectué des essais de laboratoire en considérant deux formulations commerciales avec une laque de nitrocellulose et de l'acétobutyrate de cellulose, une base de solvant et une émulsion.

Les résultats comparatifs sont indiqués dans les tableaux 3 et 4.

**Tableau 3. Acétobutyrate de cellulose, émulsion**

| **Formulation d'émulsion** | **Produit d'origine** | **Essai 1** | **Essai 2** |
|---|---|---|---|
| *COMPOSANT* | (%) | *(% p*/*p)* | *(% p*/*p)* |
| Résine d'acétobutyrate de cellulose | 9 | 9 | 9 |
| Solvant de type cétone | 32 | 49 | 51 |
| Acétate de butylglycol | 59 | 0 | 0 |
| Solketal | 0 | 42 | 40 |
| | 100,0 | 100,0 | 100,0 |

| *Résultats finaux* | | | |
|---|---|---|---|
| Viscosité (s) | 33 | 20 | 16 |
| pH (10 %) | 7,8 | 7,5 | 7,7 |
| Solubilité dans l'eau | Très bonne | Très bonne | Très bonne |
| Egalisation dans le cuir | Bonne | Bonne | Bonne |
| Frottement à sec - 200 cycles | 4,5-5,0 | 4,5-5,0 | 4,5-5,0 |
| Frottement humide - 100 cycles | 1,0-1,5 | 1,0-1,5 | 1,0-1,5 |

**Tableau 4. Emulsion de nitrocellulose**

| **Formulation d'émulsion** | **Produit d'origine** | **Essai 1** |
|---|---|---|
| *COMPOSANT* | (%) | *(% p*/*p)* |
| Résine de nitrocellulose | 8 | 8 |
| Solvant de type cétone | 41 | 61 |
| Acétate de butylglycol | 51 | 0 |
| Solketal | 0 | 31 |
| | 100,0 | 100,0 |

| *Résultats finaux* | | |
|---|---|---|
| Egalisation dans le cuir | Bonne | Bonne |
| Frottement à sec - 200 cycles | 4,5-5,0 | 4,5-5,0 |
| Frottement humide - 100 cycles | 4,5-5,0 | 4,5-5,0 |

Les avantages suivants concernant l'utilisation des dérivés de dioxolane de l'invention sont remarqués au vu des résultats comparatifs ci-dessus :
- une fluidité supérieure des formulations dans les formulations du tableau 3
- une plus faible toxicité du solketal
- à peu près la même performance avec une proportion plus faible de solketal

### Exemple 2. SOLVANT DE COLORANTS

On a testé le solketal pour solubiliser un complexe colorant-métal. La performance était bonne par comparaison avec le diacétone-alcool et le méthoxypropanol et moins efficace par comparaison avec l'éthyldiglycol, l'éthylglycol, le butyldiglycol et le butylglycol.

Ceci montre que la performance du solketal comme solvant pour des couleurs métalliques est moyenne, par exemple lorsque ce solvant est utilisé à la place du butylglycol et du butyldiglycol en remplacement total de ceux-ci. Cependant, si le solketal est utilisé conjointement avec d'autres solvants, pour tirer avantage de ses propriétés, la performance globale augmente. Donc, le solketal est acceptable pour être utilisé dans des formulations pour le finissage du cuir comme solvant de colorants.

Le principal avantage de l'utilisation de solketal est que le solvant a une faible odeur et n'est pas qualifié de substance inflammable, en plus du fait qu'il est écologiquement plus important à cause de la faible valeur de MIR. Ainsi, le remplacement d'autres glycols par le solketal, non connu jusqu'à présent, est englobé dans l'invention.

Il est bien entendu que, à l'aide des enseignements et des exemples donnés présentement l'homme de l'art est capable de réaliser des modes de réalisation équivalents de l'invention.

## Revendications

1. Utilisation de dérivés de dioxolane de formule I dans des compositions de finissage du cuir 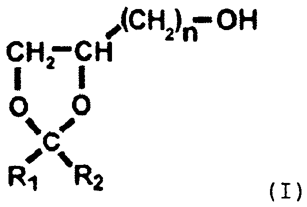 où
R₁ et R₂ sont identiques ou différents, choisis parmi l'hydrogène, un alkyle, un alcényle et un phényle, n étant un nombre entier de 1 à 5.

2. Utilisation selon la revendication 1 dans laquelle R₁ et R₂ sont choisis dans le groupe constitué par un méthyle, éthyle, n-propyle et isobutyle.

3. Utilisation selon la revendication 1 ou la revendication 2 dans laquelle n est choisi parmi 1 ou 2.

4. Utilisation selon l'une des revendications 1 à 3 dans laquelle ledit dérivé de dioxolane est le 2,2-diméthyl-1,3-dioxolane-4-méthanol.

5. Utilisation selon l'une des revendications 1 à 4 dans laquelle lesdites compositions de finissage du cuir comprennent au moins un constituant choisi dans le groupe constitué par: les liants, les agents de coloration, les agents auxiliaires, les vernis, les porteurs et les biocides.

6. Utilisation selon l'une des revendications 1 à 5 dans laquelle lesdites compositions de finissage du cuir comprennent au moins un autre solvant organique choisi dans le groupe constitué par: les esters, les ethers de glycol, les alcools, les cétones et les hydrocarbones aromatiques.

7. Utilisation selon l'une des revendications 1 à 6 dans laquelle lesdites compositions de finissage du cuir comprennent une résine à base de cellulose, tel que l'acétobutyrate de cellulose ou la nitrocellulose.

8. Utilisation de dérivés de dioxolane de formule I selon l'une des revendications 1 à 4 comme agent de pénétration dans des compositions de finissage du cuir.

9. Procédé de traitement du cuir **caractérisé en ce qu'**il comprend au moins une étape où une composition à base de dérivés de dioxolane de formule (I) tels que décrits dans l'une des revendications 1 à 4 est appliquée à la surface du cuir en train d'être traité.

## Patentansprüche

1. Verwendung von Dioxolanderivaten der Formel I in Lederzurichtungsmitteln 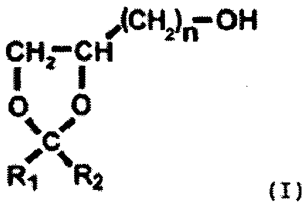 wobei
R₁ und R₂ gleich oder verschieden sind und aus Wasserstoff, Alkyl, Alkenyl und Phenyl ausgewählt sind, wobei n für eine ganze Zahl von 1 bis 5 steht.

2. Verwendung nach Anspruch 1, wobei R₁ und R₂ aus der Gruppe bestehend aus Methyl, Ethyl, n-Propyl und Isobutyl ausgewählt sind.

3. Verwendung nach Anspruch 1 oder Anspruch 2, wobei n aus 1 oder 2 ausgewählt ist.

4. Verwendung nach einem der Ansprüche 1 bis 3, wobei es sich bei dem Dioxolanderivat um 2,2-Dimethyl-1,3-dioxolan-4-methanol handelt.

5. Verwendung nach einem der Ansprüche 1 bis 4, wobei die Lederzurichtungsmittel mindestens einen Bestandteil aus der Gruppe bestehend aus Bindemitteln, Farbmitteln, Hilfsmitteln, Lacken, Trägern und Bioziden umfassen.

6. Verwendung nach einem der Ansprüche 1 bis 5, wobei die Lederzurichtungsmittel mindestens ein anderes organisches Lösungsmittel aus der Gruppe bestehend aus Estern, Glykolethern, Alkoholen, Ketonen und aromatischen Kohlenwasserstoffen umfassen.

7. Verwendung nach einem der Ansprüche 1 bis 6, wobei die Lederzurichtungsmittel ein Harz auf Basis von Cellulose, wie Celluloseacetobutyrat oder Nitrocellulose, umfassen.

8. Verwendung von Dioxolanderivaten der Formel I nach einem der Ansprüche 1 bis 4 als Penetriermittel in Lederzurichtungsmitteln.

9. Verfahren zur Behandlung von Leder, **dadurch gekennzeichnet, dass** es mindestens einen Schritt umfasst, bei dem man auf die Oberfläche des zu behandelnden Leders eine Zusammensetzung auf Basis von Dioxolanderivaten der Formel (I) gemäß einem der Ansprüche 1 bis 4 aufbringt.

## Claims

1. Use of dioxolane derivatives of formula I in leather finishing compositions 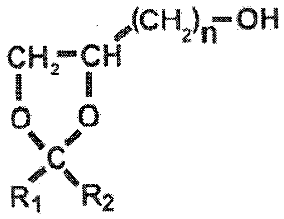 where
R₁ and R₂ are the same or different and are selected from hydrogen, alkyl, alkenyl and phenyl, n being an integer from 1 to 5.

2. Use according to Claim 1, in which R₁ and R₂ are selected from the group consisting of methyl, ethyl, n-propyl and isobutyl.

3. Use according to Claim 1 or Claim 2, in which n is selected from 1 or 2.

4. Use according to one of Claims 1 to 3, in which the said dioxolane derivative is 2,2-dimethyl-1,3-dioxolane-4-methanol.

5. Use according to one of Claims 1 to 4, in which the said leather finishing compositions comprise at least one constituent selected from the group consisting of the following: binders, colorants, auxiliary agents, varnishes, carriers and biocides.

6. Use according to one of Claims 1 to 5, in which the said leather finishing compositions comprise at least one other organic solvent selected from the group consisting of the following: esters, glycol ethers, alcohols, ketones and aromatic hydrocarbons.

7. Use according to one of Claims 1 to 6, in which the said leather finishing compositions comprise a resin based on cellulose, such as cellulose acetobutyrate or nitrocellulose.

8. Use of dioxolane derivatives of formula I according to one of Claims 1 to 4 as a penetrating agent in leather finishing compositions.

9. Process for treating leather, **characterized in that** it comprises at least one step in which a composition based on dioxolane derivatives of formula I as described in one of Claims 1 to 4 is applied to the surface of the leather being treated.
